# EUROPÄISCHE PATENTANMELDUNG

(11) **EP 1 672 013 A1**
(43) Veröffentlichungstag der Anmeldung: **21.06.2006**
(21) Anmeldenummer: 05026193.2
(22) Anmeldetag: 01.12.2005
(51) Int. Cl.: C08K 5/103, C07C 69/00

(54) **Estermischungen**

(30) Priorität: 14.12.2004 DE 102004060042
(71) Anmelder: LANXESS Deutschland GmbH, 51369 Leverkusen (DE)
(72) Erfinder: Hansel, Jan-Gerd, Dr., 51069 Köln (DE); Kuckert, Eberhard, Dr., 51375 Leverkusen (DE); Kaulen, Johannes, Dr., 51519 Odenthal (DE); Facklam, Thomas, Dr., 51375 Leverkusen (DE)

(57) **Zusammenfassung**

Estermischungen enthaltend eine Mischung von Veresterungsprodukten aus PolyetherPolyolen, einer oder mehrerer aromatischen Monocarbonsäuren oder aromatischen Monocarbonsäurederivaten und einer oder mehrerer aliphatischen Monocarbonsäuren oder aliphatischer Monocarbonsäurederivate, ein Verfahren zur deren Herstellung, sowie deren Verwendung als Weichmacher für Kunststoffe.

## Beschreibung

Die vorliegende Erfindung betrifft Estermischungen enthaltend eine Mischung von Veresterungsprodukten aus Polyether-Polyolen, einer oder mehreren aromatischen Monocarbonsäuren oder aromatischen Monocarbonsäurederivaten und einer oder mehreren aliphatischen Monocar-bonsäuren oder aliphatischen Monocarbonsäurederivaten, ein Verfahren zu deren Herstellung, sowie deren Verwendung als Weichmacher für Kunststoffe.

Weichmacher sind Substanzen, die spröden und harten Kunststoffen, wie zum Beispiel Polyvinylchlorid (PVC), beigemengt werden, um diesen für Verarbeitung und Gebrauch wünschenswerte Eigenschaften wie Biegsamkeit und Dehnbarkeit zu verleihen.

Die für die Anwendung wichtigen Substanzeigenschaften von Weichmachern sind zum Beispiel beschrieben in David F. Cadogan, Christopher J. Howick: "Plasticizers", Ullmann's Encyclopedia of Industrial Chemistry, Electronic Release, 6th ed., chap. 1 - 6, Wiley-VCH, Weinheim 2003 und L. Meier: "Weichmacher", in R. Gächter, H. Müller (Ed.): *Taschenbuch der Kunststoffadditive, 3.* Ausgabe, S. 357 - S. 382, Hanser Verlag, München 1990. Im Allgemeinen werden flüssige Weichmacher eingesetzt. Bevorzugt haben sie eine Viskosität von unter 100.000 mPas, eine Lösetemperatur in Polyvinylchlorid von unter 170°C und eine Säurezahl von unter 1 mg KOH/g.

Für die Verwendung einer Substanz als Weichmacher ist es außerdem wichtig, dass sie möglichst dauerhaft in dem mit ihr weichgemachten Kunststoff verbleibt. Viele Weichmacher neigen dazu, in mit dem weichgemachten Kunststoff in Kontakt stehende Stoffe, wie zum Beispiel andere Kunststoffe, zu migrieren. Schmier- oder Treibstoffe sowie Seifenlösungen können Weichmacher herauswaschen. Weichmacher mit unzureichender Verträglichkeit mit dem weichzumachenden Kunststoff können sich nach der Verarbeitung oberflächlich absondern und einen unerwünschten, schmierigen Film bilden. Schließlich können Weichmacher aufgrund ihrer Flüchtigkeit aus einer weichgemachten Kunststoffzubereitung heraus verdampfen. Dies führt einerseits zu einer unerwünschten Versprödung der Kunststoffzubereitung und andererseits zum ebenfalls unerwünschten Niederschlag des Weichmachers an kalten Flächen. All diese Phänomene treten in besonderem Maße auf, wenn ein aus weichgemachtem Kunststoff hergestellter Gegenstand über längere Zeit erhöhten Temperaturen ausgesetzt wird. Ein Beispiel für diese sogenannten Hochtemperaturanwendungen sind Kabelummantelungen, die im Motorraum eines Automobils eingesetzt werden.

Bevorzugt werden also Weichmacher mit niedriger Flüchtigkeit, guter Verträglichkeit und niedriger Migrationsneigung eingesetzt.

Neben Phosphorsäureestern und Sulfonsäureestern weisen vor allem die Alkylester von Carbonsäuren günstige Substanzeigenschaften für eine Verwendung als Weichmacher auf. Die technisch relevanten Weichmacher und ihre Anwendung sind bekannt und werden zum Beispiel beschrieben in David F. Cadogan, Christopher J. Howick: "Plasticizers", Ullmann's Encyclopedia of Industrial Chemistry, Electronic Release, 6th ed., Kap. 1 - 6, Wiley-VCH, Weinheim 2003 und L. Meier: "Weichmacher", in R. Gächter, H. Müller (Ed.): *Taschenbuch der Kunststoffadditive,* 3. Ausgabe, S. 341 ff., Hanser, München 1990. Die Flüchtigkeit von Substanzen nimmt im Allgemeinen mit steigendem Molekulargewicht ab. Daher werden meistens nicht einfache Ester, sondern wegen ihrer höheren Molekulargewichte bevorzugt, Ester von mehrbasigen Carbonsäuren mit einwertigen Alkoholen, Ester von einbasigen Carbonsäuren mit mehrwertigen Alkoholen oder Ester von mehrbasigen Carbonsäuren mit mehrwertigen Alkoholen eingesetzt. Bei der letztgenannten Gruppe von Estern handelt es sich um oligomere oder polymere Ester, die wegen ihrer hohen Viskositäten schwieriger zu verarbeiten sind als die beiden erstgenannten Gruppen von niedermolekularen Estern.

Ester von zwei- und dreibasigen Carbonsäuren mit einwertigen Alkoholen werden am häufigsten als Weichmacher eingesetzt. Beispiele hierfür sind die Phthalsäureester, wie zum Beispiel Dioctylphthalat (DOP), oder Trimellitsäureester, wie zum Beispiel Trioctyltrimellitat (TOTM). Diester wie Dioctylphthalat sind aufgrund ihrer verhältnismäßig hohen Flüchtigkeit für Hochtemperaturanwendungen in der Regel nicht geeignet. Der entsprechende Triester der dreibasigen Trimellitsäure, das Trioctyltrimellitat, ist als niedrigflüchtiger Weichmacher für Hochtemperaturanwendungen etabliert. Allerdings ist Trioctyltrimellitat schlechter zu verarbeiten, schlechter verfügbar und deutlich teuerer als Dioctylphthalat und kann daher für viele Anwendungen nicht eingesetzt werden.

Einige Phthalsäureester, wie zum Beispiel Dioctylphthalat, sind in letzter Zeit in den Verdacht geraten, gesundheitsschädlich zu sein. So muss Dioctylphthalat laut Dangerous Substances Directive 67/548/EEC in der EU als möglicherweise die Fortpflanzungsfähigkeit beeinträchtigend und möglicherweise fruchtschädigend gekennzeichnet werden.

Ester von einbasigen Säuren mit zweiwertigen Alkoholen lassen sich ebenfalls vorteilhaft als Weichmacher verwenden. Beispielsweise werden in US 2,956,978 B1 Dibenzoate verschiedener Glykole als Weichmacher beschrieben. Wie US 6,184,278 B1 lehrt, haben einige dieser Dibenzoate, wie zum Beispiel Ethylenglycol-, Diethylenglycol- oder Triethylenglycoldibenzoat, den Nachteil, dass sie bei 25°C Feststoffe sind.

US 2,585,448 B1, US 3,370,032 B1 sowie US 2003/0023112 A1 beschreiben gemischte Ester, die durch Umsetzung von Diolen mit einer Mischung aus aliphatischen und aromatischen Carbonsäuren hergestellt werden. Die relativ hohe Flüchtigkeit der Diolester schließt sie jedoch von vielen Anwendungen aus.

DE 2 318 411 A1 schlägt als Weichmacher für Heißklebepräparationen die Substanz Trimethylolpropantribenzoat vor. Da diese Substanz ein Feststoff ist, ist sie im Allgemeinen als Weichmacher ungeeignet.

US 3,072,591 B1 beschreibt Ester aus Polymethylolalkanen, wie zum Beispiel Trimethylolpropan, die im selben Molekül sowohl Carboxylreste mindestens einer aromatischen Carbonsäure als auch Carboxylreste aliphatischer Carbonsäuren von mindestens 6 Kohlenstoffatomen enthalten. Diese sogenannten gemischten Ester werden als Weichmacher für Vinylchloridpolymere beschrieben. Ihre Herstellung verlangt jedoch einen aufwändigen, zweistufigen Herstellprozess (US 3,072,591 B1, Spalte 5, Zeilen 15 - 17).

WO 02/053635 (US 2003 065073) beschreibt Mischungen von Estern aus Trimethylolpropan, Benzoesäure und 2-Ethylhexansäure, die als Weichmacher bevorzugt für Polyvinylchlorid verwendet werden. Die Verwendung von Ethylhexansäure ist laut Information von W. J. Scott, M. D. Collins, H. Nau; Environmental Health Supplements, Volume 102, Number S11, 1994 jedoch toxikologisch bedenklich und ist zu vermeiden.

JP 06-25474 A beschreibt Weichmacher, die durch Veresterung von Alkylenoxid-Addukten von mehrwertigen Alkoholen mit 3 bis 6 Hydroxylgruppen mit aliphatischen Carbonsäuren, welche 8 bis 24 Kohlenstoffatome enthalten, hergestellt werden. Die in JP 06-25474 A beschriebenen Weichmacher werden bevorzugt als Weichmacher für Gummiartikel verwendet. Diese Weichmacher weisen jedoch eine hohe Lösetemperatur auf, was sie für manche Verwendungen (Polyvinylchlorid) ungeeignet macht.

JP 2003-171523 A beschreibt Weichmacher, die durch Veresterungsreaktion eines Alkylenoxid-Additionsprodukts, eines mehrwertigen Alkohols und einer aromatischen Carbonsäure erhalten werden. Die in JP 2003-171523 A beschriebenen Weichmacher werden ausschließlich als Weichmacher für Acrylatharze verwendet. Diese Weichmacher sind jedoch durch eine hohe Viskosität gekennzeichnet.

Der vorliegenden Erfindung lag daher die Aufgabe zugrunde, leicht herstellbare Weichmacher für Kunststoffe bereitzustellen, die günstige Verarbeitungseigenschaften aufweisen, bei Raumtemperatur flüssig sind und auch bei längerer Lagerung flüssig bleiben, sich durch niedrige Flüchtigkeit und hohe thermische Beständigkeit auszeichnen und möglichst keine toxikologisch bedenklichen Substanzen enthalten.

Diese Aufgabe wurde gelöst durch eine Estermischung enthaltend mindestens 2 oder mehr Verbindungen der allgemeinen Formel (I), 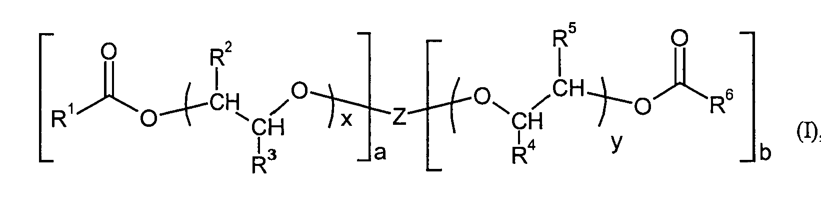 worin
- R¹: für einen geradkettigen oder verzweigten C₅₋ bis C₂₁-Alkylrest steht,
- R², R³, R⁴ und R⁵: unabhängig voneinander für H oder für C₁- bis C₄-Alkylreste steht,
- R⁶: für einen gegebenenfalls mit ein bis drei C₁- bis C₄-Alkylresten substituierten C₆- bis C₁₄-Arylrest steht,
- Z: für einen 3- bis 6-wertigen aliphatischen Kohlenwasserstoffrest steht,
- x und y: unabhängig voneinander für eine Zahl von 0 bis 6 steht, wobei x + y > 0 sein muss,
- a: für eine Zahl zwischen 0 und 6 steht, wobei a > 0 sein muss,
- b: für eine Zahl zwischen 0 und 6 steht und a < oder = b sowie die Summe a + b = die Wertigkeit des Restes Z.

Der Rest R¹ leitet sich vorzugsweise von aliphatischen Monocarbonsäuren wie Hexansäure, Heptansäure, Octansäure, Nonansäure, Decansäure, Laurinsäure, Myristinsäure, Palmitinsäure, Stearinsäure, Ölsäure, Arachinsäure oder Behensäure, insbesondere von Laurinsäure ab.

Die in der Formel (I) angegebenen Maßzahlen a, b, x und y beziehen sich auf die Zusammensetzung der in den erfindungsgemäßen Estermischungen enthaltenen Ester. Dies bedeutet sowohl, dass der Weichmacher Ester enthalten kann, in denen alle Moleküle durch dieselben Maßzahlen beschrieben sind, als auch, dass der Weichmacher eine Estermischung enthält, in der die Maßzahlen die durchschnittliche Zusammensetzung aller Moleküle wiedergeben.

Der Rest R⁶ leitet sich vorzugsweise von aromatischen Monocarbonsäuren wie Benzoesäure, o-Tolylsäure, m-Tolylsäure, p-Tolylsäure, 4-tert.-Butylbenzoesäure, 1-Naphthoesäure oder 2-Naphthoesäure, insbesondere von Benzoesäure ab.

### Der Rest Z entspricht vorzugsweise einer der allgemeinen Formeln (II) bis (VI)

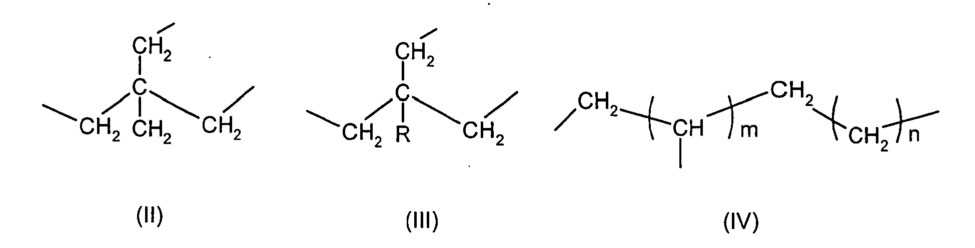

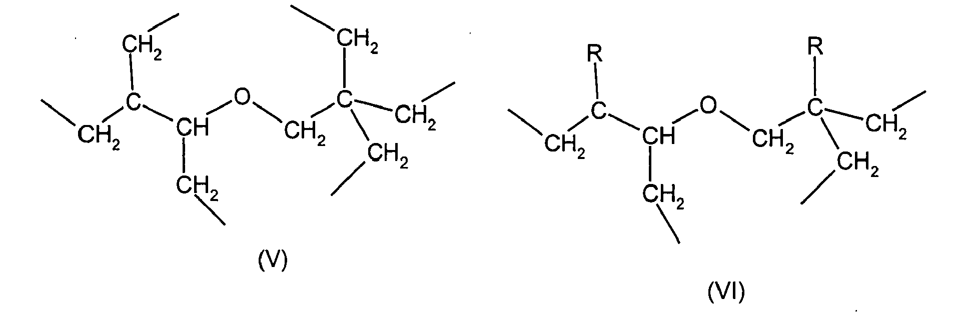

worin
- R: für H oder eine C₁- bis C₄-Alkylkette steht,
- m: für eine Zahl von 1 bis 4 steht und
- n: für eine Zahl von 0 bis 3 steht.

Der Rest Z leitet sich vorzugsweise von niedermolekularen, aliphatischen Polyalkoholen, wie Glycerin, Diglycerin, 1,2,4-Butantriol, Threit, Erythrit, Trimethylolpropan, Ditrimethylolpropan, Trimethylolethan, Pentaerythrit, Dipentaerythrit, 1,2,6-Hexantriol, Xylit, Mannit, Sorbit oder Dulcit, insbesondere von Glycerin, Trimethylolpropan oder Pentaerythrit, ab. Besonders leitet sich der Rest Z von Trimethylolpropan ab.

Die erfindungsgemäßen Ester haben üblicherweise eine Säurezahl von kleiner oder gleich 1 mg KOH/g. Bevorzugt haben sie eine Säurezahl von kleiner oder gleich 0,5 mg KOH/g.

Die Erfindung umfasst auch ein Verfahren zur Herstellung der Estermischung, dadurch gekennzeichnet, dass
a) ein oder mehrere Polyether-Polyole mit jeweils 3 bis 6 Hydroxylgruppen pro Molekül mit
b) einer Mischung aus
   1) mindestens 50 mol-% einer oder mehreren aromatischen C₇- bis C₁₅₋Monocarbonsäuren oder aromatischen C₇- bis C₁₅-Monocarbonsäurederivaten und
   2) höchstens 50 mol-% einer oder mehreren aliphatischen C₆- bis C₂₂₋Monocarbonsäuren oder aliphatischen-C₆- bis C₂₂-Monocarbonsäurederivaten
      wobei die Mischungen 1) und 2) insgesamt 100% ergeben müssen
c) gegebenenfalls bei erhöhter Temperatur,
d) gegebenenfalls in Gegenwart von Katalysatoren sowie
e) gegebenenfalls unter Abtrennung des Reaktionswassers
   verestert werden, wobei die Polyether-Polyole auch in mehreren Schritten mit jeweils nur einem Teil der insgesamt einzusetzenden Carbonsäuren verestert werden können.

Das Molekulargewicht der Polyether-Polyole beträgt üblicherweise zwischen etwa 100 g/mol und etwa 2.000 g/mol.

Die Polyether-Polyole werden vorzugsweise durch ringöffnende Polymerisation oder Copolymerisation von einem oder mehreren
- cyclischen aliphatischen Ethern wie Ethylenoxid, Propylenoxid, Ethyloxiran, Oxetan, oder Tetrahydrofuran, insbesondere Ethylenoxid und/oder Propylenoxid und
- niedermolekularen, aliphatischen Polyalkoholen mit 3 bis 6 Hydroxylgruppen im Molekül wie Glycerin, Diglycerin, 1,2,4-Butantriol, Threit, Erythrit, Trimethylolpropan, Ditrimethylolpropan, Trimethylolethan, Pentaerythrit, Dipentaerythrit, 1,2,6-Hexantriol, Xylit, Mannit, Sorbit und/oder Dulcit, insbesondere Glycerin, Trimethylolpropan und/oder Pentaerythrit
erhalten.

Die Veresterungsreaktionen können unter Zuhilfenahme von üblichen Katalysatoren, wie zum Beispiel Titan-(IV)-isopropoxylat, Titan-(IV)-butoxylat, Zinn-(II)-2-ethylhexanoat, und/oder von Schleppern, wie zum Beispiel Toluol oder Xylol, beschleunigt werden. Die erfindungsgemäßen Estermischungen können aber auch durch die Umsetzung der oben beschriebenen Polyether-Polyole mit Derivaten der verwendeten Carbonsäuren, wie zum Beispiel Carbonsäureestern, Carbonsäureanhydriden oder Carbonsäurehalogeniden, hergestellt werden. Diese und weitere Methoden sind dem Fachmann bekannt und zum Beispiel beschrieben in W. Riemenschneider: "Esters, Organic", Ullmann's Encyclopedia of Industrial Chemistry, Electronic Release, 6. Ausgabe, Kap. 5, Wiley-VCH, Weinheim 2003. Neben der eigentlichen Synthese der Ester kann ihre Herstellung auch einen oder mehrere Aufarbeitungsschritte umfassen, wie zum Beispiel Wäsche mit Wasser oder wässrigen Lösungen, Bleichung, Destillation, Trocknung, Filtration und dergleichen.

Die molare Menge aller eingesetzten Carbonsäuren kann kleiner, gleich oder größer als die molare Menge der in dem eingesetzten Polyether-Polyol vorhandenen Hydroxylgruppen sein. Bevorzugt beträgt die molare Menge aller eingesetzten Carbonsäuren 80 - 150 mol-% bezogen auf die molare Menge der in dem eingesetzten Polyether-Polyol vorhandenen Hydroxylgruppen. Besonders bevorzugt beträgt die molare Menge aller eingesetzten Carbonsäuren 90 - 120 mol-% bezogen auf die molare Menge der in dem eingesetzten Polyether-Polyol vorhandenen Hydroxylgruppen.

Nach dem Ende der Reaktion kann ein Rest nicht umgesetzter Carbonsäuren in der Reaktionsmischung verbleiben. Dies ist vor allem dann zu erwarten, wenn mehr Carbonsäuren eingesetzt werden, als 100 mol-% der Summe der in dem eingesetzten Polyether-Polyol vorhandenen Hydroxylgruppen entsprechen. Im erfindungsgemäßen Herstellverfahren wird ein Rest nicht umgesetzter Carbonsäuren durch einen oder mehrere der oben aufgezählten Aufarbeitungsschritte von der Reaktionsmischung abgetrennt.

Die aromatischen C₇- bis C₁₅-Monocarbonsäuren oder aromatischen C₇- bis C₁₅-Monocarbonsäurederivate können vorzugsweise unsubstituiert oder C₁- bis C₄-alkylsubstituiert sein.

Die aliphatischen C₆- bis C₂₂-Monocarbonsäuren oder aliphatischen C₆- bis C₂₂-Monocarbonsäurederivate können vorzugsweise geradkettig oder verzweigt, gesättigt oder olefinisch ungesättigt sein.

Vorzugsweise werden als cyclische aliphatische Ether Ethylenoxid und/oder Propylenoxid eingesetzt.

Vorzugsweise werden als Polyether-Polyole solche eingesetzt, die sich aus Glycerin, Trimethy-lolpropan oder Pentaerythrit herstellen lassen. Ganz besonders bevorzugt werden Polyether-Polyole aus Trimethylolpropan eingesetzt, die eine Hydroxylzahl zwischen 100 und 1.700 mg KOH/g aufweisen.

Die Polyether-Polyole stellen naturgemäß Mischungen dar, in denen neben Polyethern unterschiedlicher Kettenlänge auch die in die Herstellreaktion eingesetzten niedermolekularen, aliphatischen Polyalkohole anteilig enthalten sein können. Die Molekulargewichte der Polyether-Polyole sind Durchschnittswerte. Die eingesetzten Polyether-Polyole und ihre Herstellung sind bekannt und zum Beispiel beschrieben in G. Oertel: "Polyurethane," in G. W. Becker, D. Braun (Ed.): Kunststoff-Handbuch, 3. Auflage, Vol. 7, Carl Hanser-Verlag, München 1992.

Als aromatische C₇- bis C₁₅-Monocarbonsäuren oder aromatische C₇- bis C₁₅-Monocarbonsäurederivate werden vorzugsweise Benzoesäure, o-Tolylsäure, m-Tolylsäure, p-Tolylsäure, 4-tert.-Butylbenzoesäure, 1-Naphthoesäure und/oder 2-Naphthoesäure, oder Derivate dieser Säuren oder Mischungen davon verwendet. Bevorzugt wird Benzoesäure verwendet.

Als aliphatische C₆- bis C₂₂-Monocarbonsäuren oder aliphatische C₆- bis C₂₂-Monocarbonsäurederivate werden vorzugsweise Hexansäure, Heptansäure, Octansäure, Nonansäure, Decansäure, Laurinsäure, Myristinsäure, Palmitinsäure, Stearinsäure, Ölsäure, Arachinsäure und/oder Behensäure, oder Derivate dieser Säuren oder Mischungen davon, verwendet. Bevorzugt wird Laurinsäure und/oder Palmitinsäure verwendet.

Ganz besonders bevorzugt werden
- aus Trimethylolpropan und Propylenoxid herstellbare Polyether-Polyole;
- Benzoesäure als aromatische C₇- bis C₁₅-Monocarbonsäure;
- Laurinsäure als aliphatische C₆- bis C₂₂-Monocarbonsäure
verwendet.

Unabhängig von der Herstellmethode der erfindungsgemäßen Ester kann es sich bei diesen sowohl um einzelne Ester als auch um Mischungen mehrerer Ester handeln. Bei den erfindungsgemäßen Estern handelt es sich insbesondere dann um Mischungen, wenn die zu ihrer Herstellung eingesetzten Polyether-Polyole wie beschrieben selber Mischungen aus mehreren Komponenten darstellen und/oder wenn zu ihrer Herstellung mehr als eine Carbonsäure oder mehr als ein Carbonsäurederivat eingesetzt werden. Im Falle von Estermischungen sind die Acylreste der Carboxylkomponente oder Carboxylkomponenten über die vorhandenen Hydroxylfunktionen der Alkoholkomponente verteilt. Diese Verteilung kann zum Beispiel statistisch sein. Als Konsequenz der Verteilung der Acylreste kann die Estermischung einzelne Estermoleküle enthalten, in denen nur der Acylrest einer der eingesetzten Carbonsäuren enthalten ist, wie auch solche Estermoleküle, in denen zwei bis sechs verschiedene Acylreste enthalten sind.

Die Erfindung umfasst auch die Verwendung der Estergemische als Weichmacher für Kunststoffe wie Polyvinylchlorid, Vinylchlorid-basierte Copolymere, Polyvinylidenchlorid, Polyvinylacetale, Polyacrylate, Polyamide, Polylactide, Cellulose und seine Derivate, Kautschukpolymere wie Acrylnitril-Butadien-Kautschuk, hydrierter Acrylnitril-Butadien-Kautschuk, Chloroprenkautschuk, chloriertes Polyethylen, Chlorsulfonylpolyethylen, Ethylen-Propylen-Kautschuk, Acrylatkautschuk und/oder Epichlorhydrinkautschuk. Bevorzugt ist Polyvinylchlorid.

Das Polyvinylchlorid wird dabei vorzugsweise durch Homopolymerisierung aus Vinylchlorid nach dem Fachmann bekannten Methoden wie der Suspensions-, der Emulsions- oder der Massepolymerisation hergestellt. Die erfindungsgemäßen Estermischungen werden in Gemischen mit 20 bis 99 % Polyvinylchlorid, bevorzugt 45 bis 95 % Polyvinylchlorid, besonders bevorzugt 50 bis 90 % Polyvinylchlorid eingesetzt. Diese Gemische werden Weich-Polyvinylchlorid genannt und können neben den erfindungsgemäßen Estermischungen und Polyvinylchlorid auch noch andere geeignete Zusatzstoffe enthalten. Beispielsweise können Stabilisatoren, Gleitmittel, Füllstoffe, Pigmente, Flammschutzmittel, Lichtstabilisatoren, Treibmittel, polymere Verarbeitungeshilfsmittel, Schlagzähverbesserer, optische Aufheller, Antistatika oder Biostabilisatoren enthalten sein. Alle Angaben zum Gehalt sind Gew.-%-Angaben.

Die Kunststoffe enthalten vorzugsweise auch Zusatzstoffe wie Stabilisatoren, Gleitmittel, Füllstoffe, Pigmente, Flammschutzmittel, Lichtstabilisatoren, Treibmittel, polymere Verarbeitungeshilfsmittel, Schlagzähverbesserer, optische Aufheller, Antistatika und/oder Biostabilisatoren sowie Mischungen davon.

Im Folgenden werden einige geeignete Zusatzstoffe näher beschrieben. Die aufgeführten Beispiele stellen jedoch keine Einschränkung der erfindungsgemäßen Gemische dar, sondern dienen lediglich der Erläuterung. Alle Angaben zum Gehalt sind Gewichts-%-Angaben.

Stabilisatoren neutralisieren die während und/oder nach der Verarbeitung des Polyvinylchlorids abgespaltene Salzsäure. Als Stabilisatoren kommen alle üblichen Polyvinylchlorid-Stabilisatoren in fester und flüssiger Form in Betracht, beispielsweise übliche Ca/Zn-, Ba/Zn-, Pb- oder Sn-Stabilisatoren sowie auch säurebindende Schichtsilikate wie Hydrotalcit. Die erfindungsgemäßen Estermischungen können in Gemischen mit einen Gehalt an Stabilisatoren von 0,05 bis 7 %, bevorzugt 0,1 bis 5 %, besonders bevorzugt von 0,2 bis 4 % und insbesondere von 0,5 bis 3 % eingesetzt werden.

Gleitmittel sollen zwischen den Polyvinylchlorid-Partikeln wirksam werden und Reibungskräften beim Mischen, Plastifizieren und Verformen entgegenwirken. Als Gleitmittel können die erfindungsgemäßen Gemische alle für die Verarbeitung von Kunststoffen üblichen Gleitmittel enthalten. Beispielsweise kommen in Betracht Kohlenwasserstoffe, wie Öle, Paraffine und PE-Wachse, Fettalkohole mit 6 bis 20C- Atomen, Ketone, Carbonsäuren, wie Fettsäuren und Motansäure, oxidiertes PE-Wachs, Metallsalze von Carbonsäuren, Carbonsäureamide sowie Carbonsäureester, beispielsweise mit den Alkoholen Ethanol, Fettalkoholen, Glycerin, Ethandiol, Pentaerythrit und langkettigen Carbonsäuren als Säurekomponente. Die erfindungsgemäßen Estermischungen können in Gemischen mit einen Gehalt an Gleitmitteln von 0,01 bis 10 %, bevorzugt 0,05 bis 5%, besonders bevorzugt von 0,1 bis 3 % und insbesondere von 0,2 bis 2 % eingesetzt werden.

Füllstoffe beeinflussen vor allem die Druck-, Zug- und Biegefestigkeit sowie die Härte und Wärmeformbeständigkeit von weichgemachtem Polyvinylchlorid oder PVB in positiver Weise. Im Rahmen der Erfindung können die Gemische auch Füllstoffe wie beispielsweise Ruß und andere anorganische Füllstoffe, wie natürliche Calciumcarbonate, beispielsweise Kreide, Kalkstein und Marmor, synthetische Calciumcarbonate, Dolomit, Silikate, Kieselsäure, Sand, Diatomeerde, Aluminiumsilikate, wie Kaolin, Glimmer und Feldspat enthalten. Vorzugsweise werden als Füllstoffe Calciumcarbonate, Kreide, Dolomit, Kaolin, Silikate, Talkum oder Ruß eingesetzt. Die erfindungsgemäßen Estermischungen können in Gemischen mit einen Gehalt an Füllstoffen von 0,01 bis 80 %, bevorzugt 0,1 bis 60 %, besonders bevorzugt von 0,5 bis 50 % und insbesondere von 1 bis 40 % eingesetzt werden.

Die mit den erfindungsgemäßen Estermischungen zubereiteten Gemische können auch Pigmente enthalten, um das erhaltene Produkt an unterschiedliche Einsatzmöglichkeiten anzupassen. Im Rahmen der vorliegenden Erfindung können sowohl anorganische Pigmente als auch organische Pigmente eingesetzt werden. Als anorganische Pigmente können beispielsweise Cadmium-Pigmente, wie CdS, Kobalt-Pigmente, wie CoO/Al₂O₃, und Chrom-Pigmente, beispielsweise Cr₂O₃, verwendet werden. Als organische Pigmente kommen beispielsweise Monoazopigmente, kondensierte Azopigmente, Azomethinpigmente, Anthrachinonpigmente, Chincridone, Phthalocyaninpigmente, Dioxazinpigmente und Anilinpigmente in Betracht. Die erfindungsgemäßen Estermischungen können in Gemischen mit einem Gehalt an Pigmenten von 0,01 bis 10 %, bevorzugt 0,05 bis 5 %, besonders bevorzugt von 0,1 bis 3 % und insbesondere von 0,5 bis 2 % eingesetzt werden.

Um die Entflammbarkeit zu vermindern und die Rauchentwicklung beim Verbrennen zu verringern, können die erfindungsgemäßen Gemische auch Flammschutzmittel enthalten. Als Flammschutzmittel können beispielsweise Antimontrioxid, Phosphatester, Chlorparaffin, Aluminiumhydroxid, Borverbindungen, Molybdäntrioxid, Ferrocen, Calciumcarbonat oder Magnesiumcarbonat verwendet werden. Die erfindungsgemäßen Estermischungen können in Gemischen mit einem Gehalt an Flammschutzmittel von 0,01 bis 10 %, bevorzugt 0,1 bis 8 %, besonders bevorzugt von 0,2 bis 5 % und insbesondere von 0,5 bis 3 % eingesetzt werden.

Um Artikel, die aus einem die erfindungsgemäßen Estermischungen enthaltenden Gemisch hergestellt wurden, vor einer Schädigung im Oberflächenbereich durch den Einfluss von Licht zu schützen, können die Gemische auch Lichtstabilisatoren enthalten. Es können im Rahmen der vorliegenden Erfindung beispielsweise Hydroxybenzophenone oder Hydroxyphenylbenzotriazole eingesetzt werden. Die erfindungsgemäßen Estermischungen können in Gemischen mit einen Gehalt an Lichtstabilisatoren von 0,01 bis 7 %, bevorzugt 0,1 bis 5 %, besonders bevorzugt von 0,2 bis 4 % und insbesondere von 0,5 bis 3 % eingesetzt werden.

Die Kunststoffe können gegebenenfalls zusätzliche Weichmacher der Reihe Monoalkylester der Benzoesäure, Benzoesäurediester von Mono-, Di-, Tri- oder Polyalkylenglycolen, Dialkylester aliphatischen Disäuren, Dialkylester aromatischer Disäuren, Trialkylester aromatischer Trisäuren, Phenylester von Alkansulfonsäuren, Alkyl- oder Arylester der Phosphorsäure, Polyester aus Dicarbonsäuren sowie Mischungen davon enthalten.

Beispiele für weitere Weichmacher sind
- die Monoalkylester der Benzoesäure, wie zum Beispiel Isononylbenzoat,
- die Benzoesäurediester von Mono-, Di-, Tri- oder Polyalkylenglycolen, wie zum Beispiel Propylenglycoldibenzoat, Diethylenglycoldibenzoat, Dipropylenglycoldibenzoat, Triethylenglycoldbienzoat oder Polyethylenglycoldibenzoat,
- die Dialkylester aliphatischer Disäuren, wie zum Beispiel Di-(2-ethylhexyl)-adipat, Diisononyladipat, Di-(2-ethylhexyl)-sebazat, Di(2-ethylhexyl)azelat, Diisononylcyclohexan-1,2-dicarboxylat,
- die Dialkylester aromatischer Disäuren, wie zum Beispiel Di-(2-ethylhexyl)-phthalat, Diisononylphthalat, Diisodecylphthalat, Benzylbutylphthalat, Benzylisooctylphthalat, Benzylisononylphthalat
- die Trialkylester aromatischer Trisäuren, wie zum Beispiel Tri-(2-ethylhexyl)-trimellitat,
- die Phenylester von Alkansulfonsäuren, wie zum Beispiel das Produkt Mesamoll® der Lanxess Deutschland GmbH,
- die Alkyl- oder Arylester der Phosphorsäure, wie zum Beispiel Tri-(2-ethylhexyl)-phosphat, Diphenyl-2-ethylhexyl-phosphat, Diphenylkresylphosphat oder Trikresylphosphat,
- Polyester, die aus Dicarbonsäuren wie Adipinsäure oder Phthalsäure und Diolen wie 1,2-Propandiol, 1,3-Butandiol, 1,4-Butandiol oder 1,6-Hexandiol hergestellt werden können.

Im Rahmen der Erfindung können die erfindungsgemäßen Estermischungen auch in Gemischen eingesetzt werden, die weitere Kunststoffe ausgewählt aus der Gruppe bestehend aus Homo- und Copolymeren auf Basis von Ethylen, Propylen, Butadien, Vinylacetat, Glycidylacrylat, Glycidylmethacrylat, Acrylaten und Methacrylaten mit Alkoholkomponenten von verzweigten oder unverzweigten C₁- bis C₁₀-Alkoholen, Styrol oder Acrylnitril enthalten. Zu nennen sind beispielsweise Polyacrylate mit gleichen oder verschiedenen Alkoholresten aus der Gruppe der C₄- bis C₈₋Alkohole, besonders des Butanols, Hexanols, Octanols und 2-Ethylhexanols, Polymethylmethacrylat, Methylmethacrylat-Butylacrylat-Copolymere, Methylmethacrylat-Butylmethacrylat-Copolymere, Ethylen-Vinylacetat-Copolymere, chloriertes Polyethylen, Nitrilkautschuk, Acrylnitril-Butadien-Styrol-Copolymere, Ethylen-Propylen-Copolymere, Ethylen-Propylen-Dien-Copolymere, Styrol-Acrylnitril-Copolymere, Acrylnitril-Butadien-Rubber, Styrol-Butadien-Elastomere und Methylmethacrylat-Styrol-Butadien-Copolymere.

Die mit den erfindungsgemäßen Estermischungen hergestellten Gemische sind beispielsweise nützlich zur Herstellung von Gehäusen für Elektrogeräte, wie beispielsweise Küchengeräte und Computergehäuse, Rohrleitungen, Apparaten, Kabeln, Draht-Ummantelungen, Fensterprofilen, im Innenausbau, im Fahrzeug- und Möbelbau, in Bodenbelägen, medizinischen Artikeln, Lebensmittelverpackungen, Dichtungen, Folien, Verbundfolien, Folien für Verbundsicherheitsglas, insbesondere für den Fahrzeug-Bereich und den Architektur-Sektor, Schallplatten, Kunstleder, Spielzeug, Verpackungsbehältern, Klebebandfolien, Bekleidung, Beschichtungen, als Fasern für Gewebe.

Die erfindungsgemäßen Estermischungen sind gut verarbeitbar und weisen eine geringe Flüchtigkeit auf. Mit den erfindungsgemäßen Estermischungen hergestellte Weich-Polyvinylchlorid-Artikel zeichnen sich vor allem durch sehr gute Thermostabilität aus und sind gekennzeichnet durch einen geringen Gewichtsverlust bei der Thermoalterung im Umluftofen und eine hohe HCI-Stabilität im Kongorottest.

Anhand der nachfolgenden Beispiele wird die Erfindung näher erläutert, ohne dass dadurch eine Einschränkung der Erfindung bewirkt werden soll.

### Beispiele

Die angegebenen Teile beziehen sich auf das Gewicht.

### Versuchsvorschrift

487,5 Teile eines Polyether-Polyols aus Trimethylolpropan und Propylenoxid mit der Hydroxylzahl 886 mg KOH/g, 631,4 Teile Benzoesäure als aromatische Monocarbonsäure, 500,8 Teile Laurinsäure als aliphatische Monocarbonsäuren und 188 Teile Xylol als Schleppmittel wurden in einem Vierhalskolben mit Rührer, Kontaktthermometer, Wasserabscheider, Rückflusskühler und Heizpilz mit Regler unter einem leichten Stickstoffstom aufgeschmolzen. 2,3 Teile Titantetra(isopropylat) wurden als Katalysator zugegeben und die Mischung unter Rühren 20 h bei 200°C und danach 2 h bei 220°C gekocht. Nach dieser Zeit hatte sich 132 Teile Wasser abgeschieden. Die flüchtigen Bestandteile wurden innerhalb von 2 h bei 220°C und 3 mbar abgezogen. Das Reaktionsprodukt wurde nach dem Abkühlen auf 120°C mit ca. 30 Teilen Glasmehl versetzt und nach 30-minütigem Rühren über eine Glassinternutsche abgesaugt. Die Flüssigkeit wurde isoliert und die Säurezahl bestimmt.

### Beispiele 1 bis 4 und nicht erfindungsgemäße Vergleichsbeispiele V1 bis V5

Die erfindungsgemäßen Verbindungen 1 bis 4 und die nicht erfindungsgemäßen Verbindungen V1 bis V5 wurden nach der oben angegebenen Vorschrift unter Einsatz der in Tabelle 1 aufgeführten Ausgangsmaterialien hergestellt.

### Physikalische Eigenschaften der Estermischungen

Die für Estermischungen wichtigen physikalischen Daten (siehe Tabelle 1) wurden nach folgenden Methoden bestimmt:
- Viskosität:: nach DIN 53015 vom (2001) mittels Höppler-Kugelfallviskosimeter
- Pourpoint:: nach DIN ISO 3016 vom (1982)
- Säurezahl:: nach DIN EN ISO 2114 (Juni 2002)

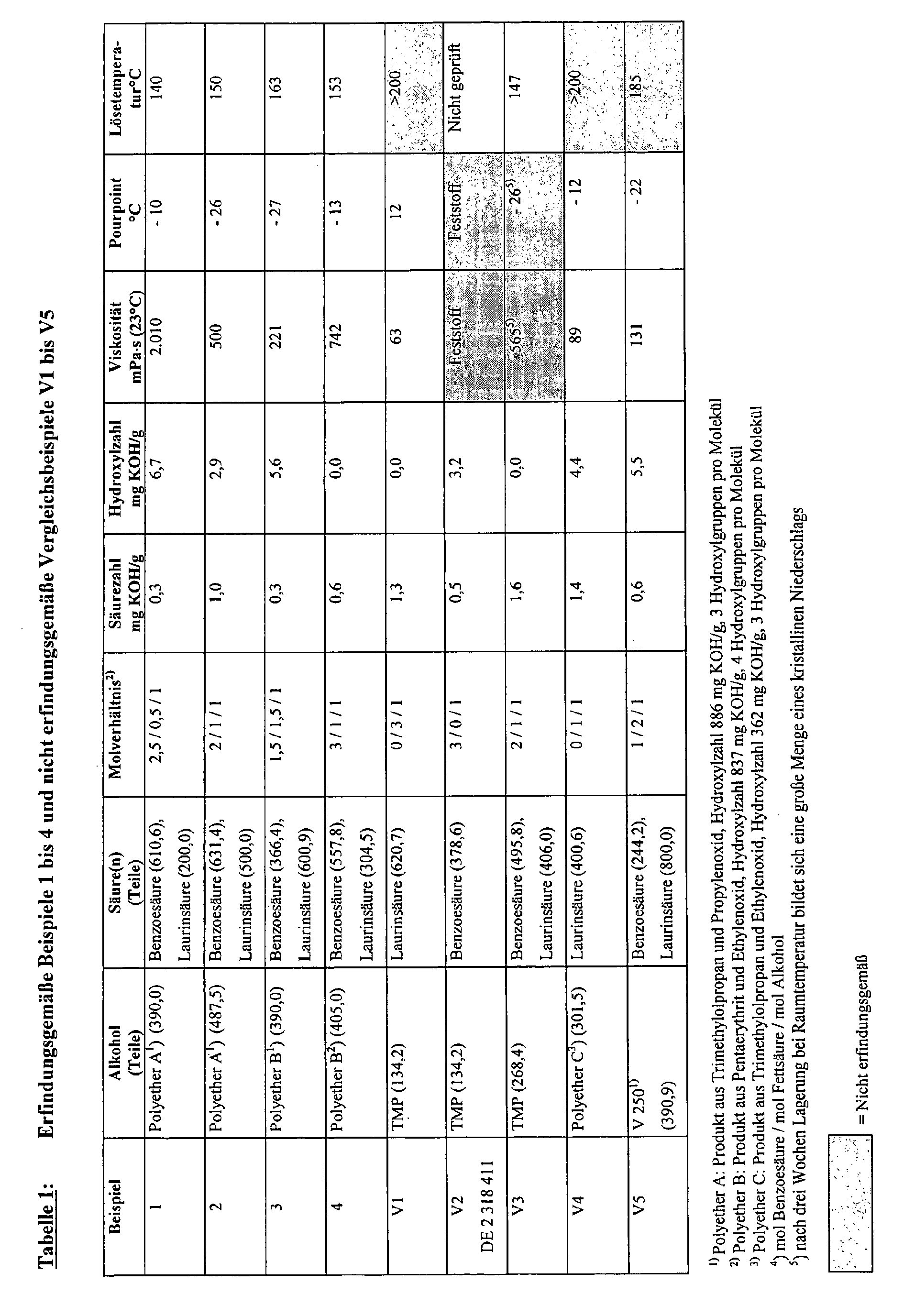

Für die Handhabung und Verarbeitung von Estermischungen als Weichmacher sind deren Viskosität und Pourpoint wichtige Kenngrößen.

Handelsübliche Weichmacher sind Flüssigkeiten mit Viskositäten zwischen etwa 10 mPas und über 10.000 mPas (siehe zum Beispiel L. Meier: "Weichmacher", in R. Gächter, H. Müller (Ed.): *Taschenbuch der Kunststoffadditive,* 3. Ausgabe, S. 383 - S. 425, Hanser Verlag, München 1990). Die angegebenen Beispiele liegen innerhalb dieses bevorzugten Viskositätsbereichs.

Der Pourpoint bezeichnet die niedrigste Temperatur, bei der eine Flüssigkeit noch fließfähig ist. Die Pourpoints der angegebenen Beispiele liegen so niedrig, dass die Substanzen bei üblichen Raumtemperaturen von über 15°C uneingeschränkt fließfähig bleiben.

### Kristallisationsneigung

Die Verarbeiter von Weich-Polyvinylchlorid sind darauf eingerichtet, flüssige Weichmacher einzusetzen. Eine vollständige oder teilweise Kristallisation eines ursprünglich flüssigen Weichmachers zum Beispiel während der Lagerung ist unerwünscht, da das erneute Auflösen oder Schmelzen und Homogenisieren zusätzliche Arbeitsschritte darstellen.

Die Substanz V2 ist in DE 2 318 411 A1 als Weichmacher für Heißklebepräparationen vorgeschlagen worden. Da V2 ein Feststoff ist, ist er für die gewöhnliche Verarbeitung zu Weich-Polyvinylchloride ungeeignet.

US 3,072,591 B1 beschreibt Weichmacher für Polyvinylchlorid auf Basis von Estern aus Polymethylolalkanen, wie zum Beispiel Trimethylolpropan, die im selben Molekül sowohl Carboxylreste mindestens einer aromatischen Carbonsäure als auch Carboxylreste aliphatischer Carbonsäuren von mindestens 6 Kohlenstoffatomen enthalten. Zur Herstellung dieser sogenannten gemischten Ester ist jedoch ein aufwändiger, zweistufiger Herstellprozess notwendig (US 3,072,591 B1, Spalte 5, Zeilen 15 - 17). Um diesen unerwünschten Aufwand zu vermeiden, wurde im Beispiel V3 das in den anderen Beispielen angewandte, einstufige Verfahren zur Herstellung solcher Ester eingesetzt. Wie sich jedoch zeigte, bildet sich in V3 nach drei Wochen Lagerung bei Raumtemperatur eine große Menge eines kristallinen Niederschlags. Die Kristallisation beginnt bei Lagerung bei 4°C schon nach vier Tagen. V3 besitzt also eine unzureichende Lagerstabilität und ist daher als Weichmacher nicht geeignet.

Die erfindungsgemäßen Estermischungen zeichnen sich überraschender Weise und aus dem Stand der Technik nicht vorhersehbar dadurch aus, dass sie bei Raumtemperatur Flüssigkeiten sind und keine Neigung zur Kristallisation zeigen. Wie der Vergleich von Beispiel 2 mit Vergleichsbeispiel V3 zeigt, sind die erfindungsgemäßen Ester beziehungsweise Estermischungen auf Basis von Polyether-Polyolen im Gegensatz zu den nicht erfindungsgemäßen Estern beziehungsweise Estermischungen auf Basis von Polyolen bei identischer Zusammensetzung der Säurekomponenten durch eine deutliche geringere Kristallisationsneigung gekennzeichnet. Die Estermischung 2 bleibt selbst nach 21 Tagen Lagerung bei 4°C klar und flüssig.

### Lösetemperatur

Die Lösetemperatur in Polyvinylchlorid ist eine wichtige Kenngröße zur Beschreibung des Geliervermögens eines Weichmachers. Weichmacher mit einer Lösetemperatur von über 170°C sind nicht mehr wirtschaftlich, da ihre Verarbeitung zu viel Energie beansprucht.
Darüber hinaus deutet eine Lösetemperatur von über 170°C auf eine mangelhafte Verträglichkeit zwischen Weichmacher und Polyvinylchlorid hin.

Die erfindungsgemäßen Estermischungen 1 bis 4 besitzen ein gutes Geliervermögen. Die Vergleichsbeispiele V1, V4 und V5, deren Säurekomponente nur oder überwiegend aus Laurinsäure besteht, weisen Lösetemperaturen von über 170°C auf und sind nicht als Weichmacher geeignet.

### Flüchtigkeit und Thermogravimetrie

Die Flüchtigkeiten der erfindungsgemäßen Estermischungen 1 bis 4 und der handelsüblichen Weichmacher Dioctylphthalat ("Vestinol AH" der Oxeno Olefinchemie GmbH, Abkürzung DOP) und Trioctyltrimellitat ("Eastman TOTM" der Eastman Chemical Company, Abkürzung TOTM) wurden durch Ermittlung des Gewichtsverlustes beim Erhitzen des Weichmachers unter den in Tabelle 2 angegebenen Bedingungen mit Hilfe eines Brabender H-A-G, E' Feuchtigkeitsbestimmers bestimmt.

Weiterhin wurden die oben genannten Substanzen zur Charakterisierung ihrer Flüchtigkeit mittels Thermogravimetrie untersucht. Dazu wurden zwei verschiedene Temperaturprogramme angewandt:
1) Die Proben wurden für 65 Minuten isotherm bei 150°C gehalten und die übriggebliebene Menge Estermischung/Weichmacher ausgewogen. In der Tabelle 2 wird die Restmenge prozentual zum Ausgangswert angegeben.
2) Die Proben wurden mit einer Aufheizrate von 10°C/min von 25°C auf 400°C erhitzt. Ermittelt und in Tabelle 2 wiedergegeben wurde die jeweilige Restmenge (in % vom Ausgangsmaterial), die bei 245,7°C noch vorhanden ist, sowie die Temperatur, bei der 50 % Estermischung/Weichmacher verschwunden sind.

Bei beiden oben erwähnten Methoden wurde ein Stickstoffstrom von 50 ml/min über die Proben geleitet. Es wurde ein Gerät des Typs Mettler Toledo TGA/SDTA 851 e verwendet.

**Tabelle 2: Flüchtigkeit und Thermogravimetrie**

| **Beispiel (HAJG)** | **Gewichtsverlust im Ofen nach 6 h bei 130°C** | **Rest nach 65 min bei 150°C isotherm** | **Rest bei 245,7°C und 10°C/min Heizrate** | **Temperatur in°C bei 50 % Schwund und 10°C/min Heizrate** |
|---|---|---|---|---|
| 1 | 0,2 % | 99,9 % | 99,4% | 356,0 |
| 2 | 0,3% | 99,7% | 99,0 % | 361,0 |
| 3 | 0,2 % | 99,7% | 99,3% | 364,1 |
| 4 | 0,8% | 99,6 % | 99,1% | 378,1 |
| DOP | 1,7% | 91,1% | 86,7% | 278,1 |
| TOTM | 0,2 % | 99,6 % | 98,9% | 338,0 |

Die Estermischungen 1 bis 4 zeichnen sich durch eine geringere Flüchtigkeit als der Standardweichmacher Dioctylphthalat aus. Aus den Thermogravimetrie-Daten wird deutlich, dass die Flüchtigkeit der erfindungsgemäßen Estermischungen niedriger ist, als die des wegen seiner niedrigen Flüchtigkeit für Hochtemperaturanwendungen empfohlenen Spezialweichmachers Trioctyltrimellitat.

### Polyvinylchlorid-Compounds

Zur weiteren Prüfung wurde unter Verwendung der Estermischungen 1 bis 4 und der in Tabelle 3 aufgelisteten Zusatzstoffe die Weich-Polyvinylchlorid-Compounds vom Typ Ca/Zn (mit Calcium-Zink-Stabilisator) und Typ Pb (mit Blei-Stabilisator) hergestellt.

**Tabelle 3: Zusammensetzung der Polyvinylchlorid-Compounds**

| **Bestandteil** | **Teile in Compound Typ Ca/Zn** | **Teile in Compound Typ Pb** |
|---|---|---|
| Polyvinylchlorid (Vinnolit® H70 DF) | 100 | 100 |
| Weichmacher | 70 | 70 |
| Stabilisator (Crompton MarkⓇ EZ 735)¹ | 12 | 0 |
| Stabilisator (Interstab® LGH 6017)² | 0 | 8 |
| Calciumstearat | 1 | 1 |
| Kreide (Omya® BSH)³ | 30 | 30 |
| Antioxidans (Ciba® Irganox® 1010)⁴ | 0,2 | 0,2 |

Die genannten Komponenten wurden zunächst bei Raumtemperatur vermischt und anschließend unter folgenden Bedingungen gewalzt :

| | |
|---|---|
| Walze: | Servitec Polimix 110 L |
| Temperatur: | 160°C |
| Dauer: | 10 min |
| Walzengeschwindigkeit vordere Walze: | 20 (U/min) |
| Walzengeschwindigkeit hintere Walze: | 24 (U/min) |
| Dicke des Walzfells: | 0,7 mm |

Das abgekühlte Walzfell wurde danach unter folgenden Bedingungen zu Folien gepresst:

| | |
|---|---|
| Pressentyp: | Schwabenthan Polystat 200T |
| Temperatur: | 170°C |
| Dauer: | 10 min |
| Druck: | 400 bar |
| Foliendicke: | 0,3 - 1 mm |

| | |
|---|---|
| ¹ Crompton MarkⓇ EZ 735 ist ein Ca/Zn-Stabilisator. | |
| ² Interstab® LGH 6017 ist ein Bleistabilisator der Firma Akcros Chemicals. Es enthält laut Sicherheitsdatenblatt: ca. 2% Bleistearat (CAS-Nr. 1072-35-1), ca. 6% dibasisches Bleistarat (CAS-Nr. 12578-12-0) und ca. 83% dibasisches Bleiphthalat (CAS-Nr. 57142-78-6). | |
| ³ Omya® BSH ist eine Kreide aus der Champagne. Das Produkt ist beschichtet. | |
| ⁴ Ciba® Irganox® 1010 der Firma SpeeialChem S. A. ist ein phenolisches Antioxidant mit der Formel Pentaerythrit-tetrakis-(3,5-di-tert.-butyl-4-hydroxycinnamat) (CAS-Nr. 6683-19-8). | |

### Thermische Beständigkeit der Polyvinylchlorid-Compounds

Die thermische Beständigkeit der Folien wurde mit folgenden Testmethoden ermittelt:

### Lagerung im Umluftofen:

Folien der Größe 30 x 30 mm mit einer Dicke von 1 mm wurden hängend in einem Umluftofen bei den in Tabelle 4 angegebenen Temperaturen und Zeiten gelagert. Nach der Lagerung wurden die Gewichtsveränderungen ermittelt und in % bezogen auf das Gewicht der eingesetzten Folie angegeben.

### Kongorottest:

Der Kongorottest wurde mit aus Walzfellen der Dicke 0,7 mm gewonnenem Granulat nach DIN 53381-1 von 1971 durchgeführt. Die Zeit, nach der der durch die HCl-Abspaltung bei 200°C eintretende Farbumschlag des Indikators eintritt, ist in Tabelle 4 aufgeführt.

**Tabelle 4: Thermische Beständigkeit der PCV-Compounds**

| **Test** | **Umluftofen 7 d / 120°C** | **Umluftofen 14 d / 140°C** | **Umluftofen 7 d / 120°C** | **Umluftofen 14 d / 140°C** | **Kongorot** |
|---|---|---|---|---|---|
| Compd. Typ | Ca/Zn | Ca/Zn | Pb | Pb | Pb |
| Weichmacher | Gewichts- veränderung | Gewichts- veränderung | Gewichts- veränderung | Gewichts- veränderung | min bis Umschl. |
| 1 | -1,5 % | -7,7 % | -1,9 % | -6,1 % | 152 |
| 2 | -1,8 % | -6,3 % | -2,1 % | -7,5 % | 180 |
| 3 | -1,4 % | -6,3 % | -1,5 % | -5,5 % | 213 |
| 4 | -2,6 % | -6,0 % | -3,9 % | -13,2 % | 139 |
| TOTM | -2,4 % | -9,7 % | -2,3 % | -8,1 % | 112 |

Eine hohe thermische Beständigkeit drückt sich in einem möglichst geringen Gewichtsverlust im Umluftofen und in einer möglichst langen Dauer bis zum Umschlag des Kongorot-Indikators aus. Die Daten in Tabelle 4 belegen die im Vergleich zu Trioctltrimellitat (TOTM) durchschnittlich bessere thermische Beständigkeit der erfindungsgemäßen Estermischungen.

### Migration

Um die Migration der erfindungsgemäßen Estermischungen aus Weich-Polyvinylchloride in einen anderen Kunststoff zu bewerten, wurden kreisrunde Prüfkörper (⌀ 50 mm) aus dem oben beschriebenen Polyvinylchlorid-Compound Typ Ca/Zn hergestellt, beidseitig mit Polyethylen-Folie (Atofina Laqtene® LDO 0304) kontaktiert, die kontaktierten Prüfkörper mit einem 5-kg-Gewicht beschwert, in einem Trockenschrank bei 70°C gelagert und über einen Zeitraum von 12 Tagen die Gewichtsveränderung der Prüfkörper verfolgt. In Tabelle 5 sind die Mittelwerte der Gewichtsveränderungen aus einer Dreifachbestimmung als Gewichts-% bezogen auf die ursprünglichen Probengewichte wiedergegeben.

**Tabelle 5: Weichmachermigration**

| **Eingesetzter Estermischung/ Weichmacher** | **1 Tag** | **2 Tage** | **5 Tage** | **12 Tage** |
|---|---|---|---|---|
| 1 | -0,5 % | -0,8 % | -0,8 % | -1,0 % |
| 2 | -0,8 % | -1,0 % | -1,2 % | -1,5 % |
| TOTM | -1,2 % | -1,5 % | -2,1 % | -2,6 % |

Je größer der gemessene Gewichtsverlust, desto größer die durch Migration in das Polyethylen übergegangene Menge Estermischung/Weichmacher. Die Daten in Tabelle 6 belegen die im Vergleich zu Trioctyltrimellitat deutlich bessere Migrationsbeständigkeit der erfmdungsgemäßen Estermischungen 1 und 2.

### Extraktion

Um die Extraktion der erfindungsgemäßen Estermischungen aus Weich-Polyvinylchlorid durch flüssige Medien zu bewerten, wurden kreisrunde Prüfkörper (∅ 60 mm) aus dem oben beschriebenen Polyvinylchlorid-Compound Typ Ca/Zn hergestellt, in eine mit 50 ml der in Tabelle 6 angegebenen Medien gefüllte Petrischale getaucht und die Schalen in einem Trockenschrank bei der in Tabelle 6 angegebenen Temperatur 10 Tage gelagert. Danach wurde die Gewichtsveränderung der gereinigten Prüfkörper bestimmt und in Tabelle 6 als Gewichts-% bezogen auf die ursprünglichen Probengewichte wiedergegeben.

**Tabelle 6: Weichmacherextraktion**

| **Eingesetzter Estermischung/ Weichmacher** | **ASTM-Öl 23°C** | **ASTM-Öl 60°C** | **IRM 902 23°C** | **IRM 902 60°C** | **IRM 903 23°C** | **IRM 903 60°C** |
|---|---|---|---|---|---|---|
| 1 | -0,3 % | -10,5 % | -0,2 % | -8,8 % | -0,1 % | -9,8 % |
| 2 | -2,1 % | -14,5% | -1,9 % | -13,7 % | -2,3 % | -12,4 % |
| TOTM | -6,7 % | -18,2 % | -4,0 % | -15,4 % | -8,3 % | -14,0 % |

Je größer der gemessene Gewichtsverlust, desto größer die durch Extraktion in das Medium übergegangene Menge Weichmacher. Die Daten in Tabelle 6 belegen die im Vergleich zu Trioctyltrimellitat deutlich bessere Extraktionsbeständigkeit der erfindungsgemäßen Weichmacher 1 und 2.

## Patentansprüche

1. Estermischung enthaltend mindestens 2 oder mehr Verbindungen der allgemeihen Formel (I), 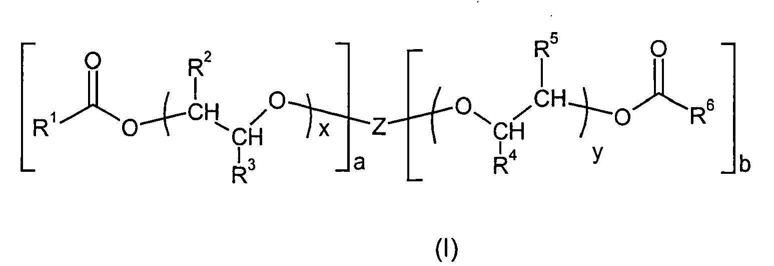 worin
R¹ für einen geradkettigen oder verzweigten C₅- bis C₂₁-Alkylrest steht,
R², R³, R⁴ und R⁵ unabhängig voneinander für H oder für C₁- bis C4-Alkylreste steht,
R⁶ für einen gegebenenfalls mit ein bis drei C₁- bis C₄-Alkylresten substituierten C₆- bis C₁₄-Arylrest steht,
Z für einen 3- bis 6-wertigen aliphatischen Kohlenwasserstoffrest steht,
x und y unabhängig voneinander für eine Zahl von 0 bis 6 steht, wobei x + y > 0 sein muss,
a für eine Zahl zwischen 0 und 6 steht, wobei a > 0 sein muss,
b für eine Zahl zwischen 0 und 6 steht und
a < oder = b sowie
die Summe a + b = die Wertigkeit des Restes Z.

2. Estermischung gemäß Anspruch 1, **dadurch gekennzeichnet, dass** der Rest R¹ sich von aliphatischen Monocarbonsäuren ableitet.

3. Estermischung gemäß Anspruch 1, **dadurch gekennzeichnet, dass** der Rest R⁶ sich von aromatischen Monocarbonsäuren ableitet.

4. Estermischung gemäß einem oder mehreren der Ansprüche 1 bis 3, **dadurch gekennzeichnet, dass** der Rest Z einer der allgemeinen Formeln (II) bis (VI) entspricht 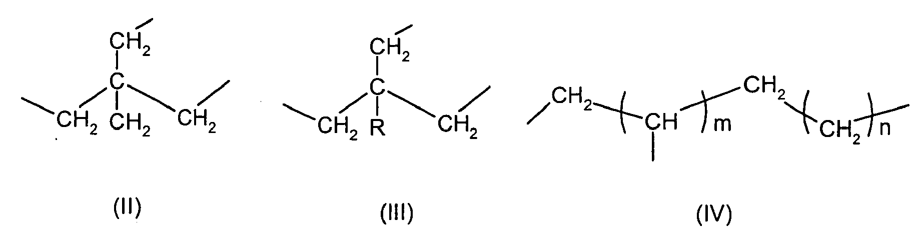 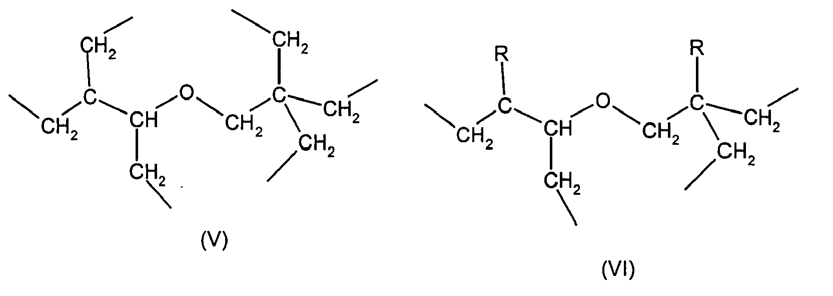 worin
R für H oder eine C₁- bis C₄-Alkylkette steht,
m für eine Zahl von 1 bis 4 steht und
n für eine Zahl von 0 bis 3 steht.

5. Estermischung gemäß den Ansprüchen 1 und 4, **dadurch gekennzeichnet, dass** der Rest Z sich von niedermolekularen, aliphatischen Polyalkoholen ableitet.

6. Verfahren zur Herstellung der Estermischung gemäß einem oder mehreren der Ansprüche 1 bis 5, **dadurch gekennzeichnet, dass**
a) ein oder mehrere Polyether-Polyole mit jeweils 3 bis 6 Hydroxylgruppen pro Molekül mit
b) einer Mischung aus
1) mindestens 50 mol-% einer oder mehrerer aromatischer C₇- bis C₁₅₋Monocarbonsäuren oder aromatischer C₇- bis C₁₅-Monocarbonsäurederivate und
2) höchstens 50 mol-% einer oder mehrerer aliphatischer C₆- bis C₂₂₋Monocarbonsäuren oder aliphatischer C₆- bis C₂₂-Monocarbonsäurederivate
wobei die Mischungen 1) und 2) insgesamt 100% ergeben müssen
c) gegebenenfalls bei erhöhter Temperatur,
d) gegebenenfalls in Gegenwart von Katalysatoren sowie
e) gegebenenfalls unter Abtrennung des Reaktionswassers
verestert werden, wobei die Polyether-Polyole auch in mehreren Schritten mit jeweils nur einem Teil der insgesamt einzusetzenden Carbonsäuren verestert werden können.

7. Verfahren gemäß Anspruch 6, **dadurch gekennzeichnet, dass** die Polyether-Polyole durch ringöffnende Polymerisation oder Copolymerisation von einem oder mehreren
• cyclischen aliphatischen Ethern und
• niedermolekularen, aliphatischen Polyalkoholen mit 3 bis 6 Hydroxylgruppen im Molekül
erhalten werden.

8. Verfahren gemäß Anspruch 6, **dadurch gekennzeichnet, dass**
• die aromatischen C₇- bis C₁₅-Monocarbonsäuren oder aromatischen C₇- bis C₁₅-Monocarbonsäurederivate unsubstituiert oder C₁- bis C₄-alkylsubstituiert sein können und/oder
• die aliphatischen C₆- bis C₂₂-Monocarbonsäuren oder aliphatischen C₆- bis C₂₂-Monocarbonsäurederivate geradkettig oder verzweigt, gesättigt oder olefinisch ungesättigt sein können.

9. Verfahren gemäß der Ansprüche 6 und 8, **dadurch gekennzeichnet, dass** die aromatischen C₇- bis C₁₅-Monocarbonsäuren oder aromatischen C₇- bis C₁₅₋Monocarbonsäurederivate Benzoesäure, o-Tolylsäure, m-Tolylsäure, p-Tolylsäure, 4-tert.-Butylbenzoesäure, 1-Naphthoesäure und/oder 2-Naphthoesäure oder Derivate dieser Säuren oder Mischungen davon, sind.

10. Verfahren gemäß Anspruch 6, **dadurch gekennzeichnet, dass** die aliphatischen C₆₋bis C₂₂-Monocarbonsäuren oder aliphatischen C₆- bis C₂₂-Monocarbonsäurederivate Hexansäure, Heptansäure, Octansäure, Nonansäure, Decansäure, Laurinsäure, Myristinsäure, Palmitinsäure, Stearinsäure, Ölsäure, Arachinsäure und/oder Behensäure oder Derivate dieser Säuren oder Mischungen davon, sind.

11. Verfahren zur Herstellung der Estermischung gemäß Ansprüchen 6 bis 10, **dadurch gekennzeichnet, dass**
• aus Trimethylolpropan und Propylenoxid hergestellte Polyether-Polyole;
• Benzoesäure als aromatische C₇- bis C₁₅-Monocarbonsäure; und
• Laurinsäure als aliphatische C₆- bis C₂₂-Monocarbonsäure
verwendet werden.

12. Verwendung der Estergemische gemäß den Ansprüchen 1 bis 5 sowie den gemäß Ansprüchen 6 bis 12 hergestellten Estermischungen als Weichmacher für Kunststoffe.

13. Verwendung der Estermischungen als Weichmacher für Kunststoffe gemäß Anspruch 12, **dadurch gekennzeichnet, dass** die Kunststoffe als Zusatzstoffe Stabilisatoren, Gleitmittel, Füllstoffe, Pigmente, Flammschutzmittel, Lichtstabilisatoren, Treibmittel, polymere Verarbeitungshilfsmittel, Schlagzähverbesserer, optische Aufheller, Antistatika und/oder Biostabilisatoren sowie Mischungen davon enthalten.

14. Verwendung der Estermischungen als Weichmacher für Kunststoffe gemäß Anspruch 12, **dadurch gekennzeichnet, dass** die Kunststoffe zusätzliche Weichmacher der Reihe Monoalkylester der Benzoesäure, Benzoesäurediester von Mono-, Di-, Tri- oder Polyalkylenglycolen, Dialkylester aliphatischen Disäuren, Dialkylester aromatischer Disäuren, Trialkylester aromatischer Trisäuren, Phenylester von Alkansulfonsäuren, Alkyl- oder Arylester der Phosphorsäure, Polyester aus Dicarbonsäuren sowie Mischungen davon enthalten.
